# EUROPÄISCHE PATENTSCHRIFT

(11) **EP 3 136 934 B1**
(45) Veröffentlichungstag und Bekanntmachung des Hinweises auf die Patenterteilung: **01.08.2018**
(21) Anmeldenummer: 14719790.9
(22) Anmeldetag: 29.04.2014
(51) Int. Cl.: A47L 1/05

(54) **HARTFLÄCHENREINIGUNGS-HANDGERÄT UND HARTFLÄCHENREINIGUNGSSYSTEM**
HAND-HELD CLEANING DEVICE FOR HARD SURFACES AND CLEANING SYSTEM FOR HARD SURFACES
APPAREIL MANUEL DE NETTOYAGE DE SURFACES DURES ET SYSTÈME DE NETTOYAGE DE SURFACES DURES

(43) Veröffentlichungstag der Anmeldung: 08.03.2017
(73) Patentinhaber: Alfred Kärcher GmbH & Co. KG, 71364 Winnenden (DE)
(72) Erfinder: GRUBER, Bernd, 71549 Auenwald (DE); KLEIN, Benedikt, 71336 Waiblingen (DE); BENZLER, Gottfried, 71737 Kirchberg a. d. Murr (DE); KROHM, Daniel, 71397 Leutenbach (DE); SCHMIDGALL, Martin, 71546 Aspach (DE); STEWEN, Christian, 71672 Marbach (DE)
(74) Vertreter: Hoeger, Stellrecht & Partner Patentanwälte mbB
(86) Internationale Anmeldenummer: PCT/EP2014/058653
(87) Internationale Veröffentlichungsnummer: WO 2015/165497

(56) Entgegenhaltungen:
- EP-A2- 2 227 126
- CN-A- 103 099 582
- JP-A- 2001 321 310
- US-A- 4 536 694

## Beschreibung

Die vorliegende Erfindung betrifft ein Hartflächenreinigungs-Handgerät mit einer Absaugeinrichtung, einer mit der Absaugeinrichtung zusammenwirkenden Saugdüse, einer wiederaufladbaren Batterie zum Versorgen der Absaugeinrichtung mit elektrischer Energie und einem mit der wiederaufladbaren Batterie verbundenen ersten Ladeanschluss zum Verbinden mit einer Ladevorrichtung.

Ferner betrifft die vorliegende Erfindung ein Hartflächenreinigungssystem umfassend ein Hartflächenreinigungs-Handgerät.

Ein Hartflächenreinigungs-Handgerät der eingangs beschriebenen Art ist beispielsweise aus der EP 2 227 126 B1 bekannt. Es weist einen ersten Ladeanschluss auf, der mit einer Ladevorrichtung, beispielsweise einem Ladenetzteil, verbunden werden kann. Die wiederaufladbare Batterie auf diese Weise zu laden, ist im Alltagsgebrauch des Hartflächenreinigungs-Handgeräts jedoch häufig umständlich.

Es ist daher eine Aufgabe der vorliegenden Erfindung, die Handhabung beim Laden der wiederaufladbaren Batterie eines Hartflächenreinigungs-Handgeräts zu verbessern.

Diese Aufgabe wird bei einem Hartflächenreinigungs-Handgerät der eingangs beschriebenen Art erfindungsgemäß dadurch gelöst, dass es einen zweiten, mit der wiederaufladbaren Batterie verbundenen Ladeanschluss zum Verbinden mit der Ladevorrichtung aufweist.

Der zweite Ladeanschluss ermöglicht es insbesondere, die wiederaufladbare Batterie des Hartflächenreinigungs-Handgeräts auf eine alternative Weise zu laden. Beispielsweise kann dies über ein zweites Ladenetzteil erfolgen oder über eine Ladevorrichtung, welche das Hartflächenreinigungs-Handgerät teilweise aufnimmt. Die beiden Ladeanschlüsse können insbesondere derart angeordnet und ausgebildet sein, dass sie das Laden des Hartflächenreinigungs-Handgeräts in jedem Fall in aufrechter Stellung ermöglichen. Wenn nämlich das Hartflächenreinigungs-Handgerät einen Flüssigkeitstank in Form eines Sammelbehälters umfasst, in welchem mit der Absaugeinrichtung aufgesaugte Reinigungsflüssigkeit gesammelt wird, dann ist es günstig, wenn das Hartflächenreinigungs-Handgerät in aufrechter Stellung geladen werden kann, so dass möglichst keine Reinigungsflüssigkeit aus dem Sammelbehälter austreten kann.

Günstig ist es, wenn das Hartflächenreinigungs-Handgerät ein Gehäuse mit einer Gehäuseunterseite aufweist, welche eine Standfläche zum aufrechten Abstellen des Hartflächenreinigungs-Handgeräts definiert, und mit mindestens einer quer zur Gehäuseunterseite verlaufenden Gehäuseseite, wobei der erste Ladeanschluss in der mindestens einen Gehäuseseite angeordnet oder ausgebildet ist. Den ersten Ladeanschluss in der mindestens einen Gehäuseseite anzuordnen oder auszubilden, hat insbesondere den Vorteil, dass das Hartflächenreinigungs-Handgerät mit seiner Standfläche auf eine ebene oder im Wesentlichen ebene Unterlage aufrecht abgestellt werden kann, wobei dann der an der Gehäuseseite angeordnete oder ausgebildete erste Ladeanschluss frei zugänglich ist, beispielsweise um mit einem Anschlusskabel eines Ladenetzteils verbunden zu werden.

Ferner ist es vorteilhaft, wenn das Hartflächenreinigungs-Handgerät ein Gehäuse mit einer Gehäuseunterseite aufweist, welche eine Standfläche zum aufrechten Abstellen des Hartflächenreinigungs-Handgeräts definiert, und mit mindestens einer quer zur Gehäuseunterseite verlaufenden Gehäuseseite, wobei der zweite Ladeanschluss in der Gehäuseunterseite angeordnet oder ausgebildet ist. Den zweiten Ladeanschluss in der Gehäuseunterseite anzuordnen oder auszubilden, hat insbesondere den Vorteil, dass das Hartflächenreinigungs-Handgerät aufrecht in eine entsprechend ausgebildete Ladevorrichtung gestellt werden kann, welche einen zum zweiten Ladeanschluss korrespondierenden Anschluss aufweist. Insbesondere ermöglicht es der zweite Ladeanschluss, das Hartflächenreinigungs-Handgerät auf seiner Standfläche in der Ladevorrichtung abzustellen, so dass Anschlusskontakte der Ladevorrichtung mit dem zweiten Ladeanschluss mechanisch und elektrisch derart zusammenwirken können, dass ohne zusätzliches manuelles Verbinden der Ladevorrichtung mit dem Hartflächenreinigungs-Handgerät ein elektrischer Kontakt zwischen beiden hergestellt werden kann, um die wiederaufladbare Batterie aufzuladen.

Günstig ist es, wenn der erste Ladeanschluss in Form einer ersten Ladeanschlusssteckbuchse mit mindestens zwei elektrisch leitenden und gegeneinander isolierten ersten Ladeanschlusskontakten ausgebildet ist und/oder wenn der zweite Ladeanschluss in Form einer zweiten Ladeanschlusssteckbuchse mit mindestens zwei elektrisch leitenden und gegeneinander isolierten zweiten Ladeanschlusskontakten ausgebildet ist. Der erste und der zweite Ladeanschluss lassen sich so beispielsweise mit einem zwei Verbindungsleitungen umfassenden Anschlusskabel mit einer Ladevorrichtung verbinden. Insbesondere kann der erste Ladeanschluss in Form eines elektrischen Standardanschlusses in Form eines elektrischen Steckverbinders ausgebildet sein, um mit einem Standardladegerät verbunden zu werden.

Vorteilhaft ist es, wenn die ersten Ladeanschlusskontakte parallel oder im Wesentlichen parallel zur Standfläche abstehend angeordnet oder ausgebildet sind. Diese Ausgestaltung ermöglicht es, das Hartflächenreinigungs-Handgerät mit seiner Standfläche auf eine ebene oder im Wesentlichen ebene Fläche zu stellen, wobei dann der erste Ladeanschluss beispielsweise an der Gehäuseseite frei zugänglich ist und ein Anschlusskabel mit entsprechendem Stecker mit dem ersten Ladeanschluss in Eingriff gebracht werden kann, ohne dass das Hartflächenreinigungs-Handgerät nochmals hochgehoben werden muss.

Um die Ladeanschlusskontakte der Ladeanschlüsse zu schützen, ist es günstig, wenn die ersten und/oder zweiten Ladeanschlusskontakte nicht über die Gehäuseunterseite und/oder über die Gehäuseseite vorstehen. Optional können Abdeckelemente vorgesehen sein, um die Ladeanschlüsse zu verschließen, wenn sie nicht mit dem Ladegerät oder einem Ladekabel in Eingriff stehen.

Der elektrische Aufbau des Hartflächenreinigungs-Handgeräts wird besonders einfach, wenn der erste Ladeanschluss und der zweite Ladeanschluss elektrisch parallel geschaltet sind. So kann die wiederaufladbare Batterie des Hartflächenreinigungs-Handgeräts auf einfache Weise entweder über den ersten Ladeanschluss oder über den zweiten Ladeanschluss mit einer Ladevorrichtung verbunden und aufgeladen werden.

Gemäß einer weiteren bevorzugten Ausführungsform der Erfindung kann vorgesehen sein, dass das Hartflächenreinigungs-Handgerät ein Batteriefach für die wiederaufladbare Batterie aufweist. Die Batterie kann so insbesondere geschützt am Hartflächenreinigungs-Handgerät angeordnet werden. Beispielsweise kann die Batterie gleichzeitig auch einen Verschluss des Batteriefachs bilden.

Günstig ist es, wenn das Hartflächenreinigungs-Handgerät einen Batteriefachdeckel zum Verschließen des Batteriefachs aufweist. Auf diese Weise können Kontakte am Hartflächenreinigungs-Handgerät und an der wiederaufladbaren Batterie besonders gut vor Verschmutzung geschützt werden. Insbesondere kann der Batteriefachdeckel das Batteriefach fluiddicht verschließend ausgebildet sein.

Vorteilhaft ist es, wenn im Batteriefach mindestens zwei elektrisch leitende Batteriefachkontakte zum elektrischen Kontaktieren mit mindestens zwei Batteriekontakten der wiederaufladbaren Batterie angeordnet oder ausgebildet sind und wenn die mindestens zwei Batteriefachkontakte jeweils über eine elektrische Verbindungsleitung mit einem der beiden ersten Ladeanschlusskontakte des ersten und einem der beiden zweiten Ladeanschlusskontakte des zweiten Ladeanschlusses elektrisch leitend verbunden sind. Eine im Batteriefach angeordnete wiederaufladbare Batterie kann so auf einfache Weise über eine Ladevorrichtung geladen werden, die entweder mit dem ersten Ladeanschluss oder mit dem zweiten Ladeanschluss verbunden ist.

Günstigerweise weisen der erste Ladeanschluss und der zweite Ladeanschluss eine voneinander abweichende Form auf. Auf diese Weise kann insbesondere sichergestellt werden, dass mit einem Anschlusskabel, welches mit dem ersten Ladeanschluss koppelbar ist, nicht der zweite Ladeanschluss in Eingriff gebracht werden kann. So kann auf diese Weise nur der erste Ladeanschluss des Hartflächenreinigungs-Handgeräts in aufrechter Stellung beispielsweise mit einem Anschlusskabel eines Ladegeräts verbunden werden, dagegen nicht mit dem zweiten Ladeanschluss. Insbesondere wenn letzterer in der Gehäuseunterseite angeordnet ist, müsste zum Verbinden mit dem Anschlusskabel das Hartflächenreinigungs-Handgerät in einer nicht aufrechten Stellung abgelegt werden. Dabei kann jedoch im ungünstigsten Fall Reinigungsflüssigkeit aus dem Sammelbehälter austreten.

Die eingangs gestellte Aufgabe wird ferner bei einem Hartflächenreinigungssystem der eingangs beschriebenen Art erfindungsgemäß dadurch gelöst, dass es eines der oben beschriebenen Hartflächenreinigungs-Handgeräte und mindestens eine Ladevorrichtung in Form eines Batterieladegeräts umfasst, welches eine Netzanschlusseinrichtung zum Verbinden mit einem Stromnetz und eine Ladeanschlusseinrichtung aufweist, welche ausgebildet ist zum mechanischen und elektrischen Verbinden mit dem ersten und/oder dem zweiten Ladeanschluss.

Ein solches Hartflächenreinigungssystem ermöglicht es insbesondere, die wiederaufladbare Batterie des Hartflächenreinigungs-Handgeräts über den ersten oder über den zweiten Ladeanschluss aufzuladen. Das Batterieladegerät kann insbesondere eine Ladeschaltung zum Laden der Batterie umfassen oder alternativ auch als eine reine Stromversorgung ohne eine Ladelogik definierende Ladeschaltung ausgebildet sein.

Günstig ist es, wenn die Ladeanschlusseinrichtung ein Anschlusskabel mit einer ersten Steckereinrichtung umfasst und wenn die erste Steckereinrichtung ausgebildet ist zum mechanischen und elektrischen Verbinden mit dem ersten oder dem zweiten Ladeanschluss. Insbesondere kann die Ladeanschlusseinrichtung derart ausgebildet sein, dass sie ausschließlich mit dem ersten Ladeanschluss in Eingriff gebracht werden kann, also beispielsweise dann, wenn der erste Ladeanschluss in der Gehäuseseite des Hartflächenreinigungs-Handgeräts angeordnet oder ausgebildet und bei aufrecht abgestelltem Hartflächenreinigungs-Handgerät frei zugänglich ist, um mit der Ladeanschlusseinrichtung verbunden zu werden.

Auf besonders einfache Weise lässt sich die wiederaufladbare Batterie des Hartflächenreinigungs-Handgeräts aufladen, wenn die Ladeanschlusseinrichtung ein Anschlusskabel mit einer ersten Steckereinrichtung umfasst und wenn die erste Steckereinrichtung ausgebildet ist zum mechanischen und elektrischen Verbinden mit dem ersten oder dem zweiten Ladeanschluss. Insbesondere kann die erste Steckereinrichtung ausgebildet sein, um ausschließlich mit dem ersten Ladeanschluss verbunden zu werden. Beispielsweise kann so das Hartflächenreinigungs-Handgerät mit der ersten Steckereinrichtung der Ladeanschlusseinrichtung gekoppelt werden.

Besonders kompakt ausbilden lässt sich das Batterieladegerät, wenn es ein Schaltnetzteil umfasst oder in Form eines Schaltnetzteils ausgebildet ist.

Die Handhabbarkeit des Hartflächenreinigungssystems kann insbesondere dadurch weiter verbessert werden, wenn das Schaltnetzteil in Form eines Steckerschaltnetzteils ausgebildet ist zum Verbinden mit dem Stromnetz. Beispielsweise kann das Steckerschaltnetzteil ein Gehäuse aufweisen, welches einen Stecker zum Verbinden mit einer Steckdose eines Stromnetzes umfasst. Zusätzlich kann das Steckerschaltnetzteil ein Anschlusskabel mit der ersten Steckereinrichtung zum Verbinden mit insbesondere dem ersten Ladeanschluss des Hartflächenreinigungs-Handgeräts aufweisen.

Für eine besonders sichere Handhabung des Hartflächenreinigungs-Handgeräts ist es günstig, wenn die Ladeanschlusseinrichtung eine Ladeschale mit einer Gehäuseaufnahme zum mindestens teilweisen Aufnehmen des Hartflächenreinigungs-Handgeräts in aufrechter Stellung umfasst. Die Ladeschale kann insbesondere derart ausgebildet sein, dass das Hartflächenreinigungs-Handgerät nicht umfallen kann, wenn es mindestens teilweise in die Gehäuseaufnahme eingreift oder eintaucht.

Günstig ist es, wenn die Ladeschale eine zweite Steckereinrichtung aufweist und wenn die zweite Steckereinrichtung korrespondierend zum zweiten Ladeanschluss ausgebildet ist. Auf diese Weise ist es möglich, den zweiten Ladeanschluss mit der zweiten Steckereinrichtung in Eingriff zu bringen, wenn das Hartflächenreinigungs-Handgerät mindestens teilweise in die Gehäuseaufnahme eingreift.

Gemäß einer weiteren bevorzugten Ausführungsform der Erfindung kann vorgesehen sein, dass die Gehäuseaufnahme eine Aufstandsfläche für die Gehäuseunterseite aufweist und dass die zweite Steckereinrichtung von der Aufstandsfläche vorstehend angeordnet oder ausgebildet ist. Insbesondere kann die zweite Steckereinrichtung quer, vorzugsweise senkrecht, von der Aufstandsfläche abstehend ausgebildet sein. So kann das Hartflächenreinigungs-Handgerät auf einfache Weise in die Gehäuseaufnahme abgestellt werden, wobei dabei automatisch die zweite Steckereinrichtung und der zweite Ladeanschluss in Eingriff gelangen. Ein umständliches Einstecken von Hand, wie dies bei einer Steckereinrichtung eines Anschlusskabels beispielsweise in Verbindung mit dem ersten Ladeanschluss erforderlich ist, kann so vermieden werden.

Ferner kann es vorteilhaft sein, wenn die Ladeschale einen dritten Ladeanschluss aufweist, welcher elektrisch leitend mit der zweiten Steckereinrichtung verbunden ist. Beispielsweise kann der dritte Ladeanschluss so auf einfache Weise mit einer Steckereinrichtung eines Ladegeräts verbunden werden. Dieses kann so entweder direkt über den ersten Ladeanschluss oder indirekt über den zweiten Ladeanschluss mit der im Hartflächenreinigungs-Handgerät befindlichen Batterie verbunden werden. Insbesondere ist es vorteilhaft, wenn der dritte Ladeanschluss und die zweite Steckereinrichtung an einem gemeinsamen Bauteil ausgebildet oder angeordnet sind. Beispielsweise kann dieses an der Ladeschale befestigbar, insbesondere anclipbar ausgebildet sein. Das gemeinsame Bauteil kann insbesondere derart aufgebaut sein, dass der dritte Ladeanschluss und die zweite Steckereinrichtung relativ zueinander abgewinkelt ausgebildet oder angeordnet sind. Insbesondere können sie senkrecht zueinander angeordnet oder ausgebildet sein. Ferner kann das gemeinsame Bauteil, das vorzugsweise in eine entsprechende Durchbrechung der Ladeschale einsetzbar ist, auch ein umlaufendes Dichtelement aufweisen oder tragen, damit eine Abdichtung der Durchbrechung an der Ladeschale zu erreichen. Beispielsweise kann das Dichtelement in Form einer vorspringenden, flanschartigen Dichtkontur ausgebildet sein, die insbesondere einstückig mit dem Bauteil ausgebildet ist.

Vorzugsweise sind der dritte Ladeanschluss und der erste Ladeanschluss identisch oder im Wesentlichen identisch ausgebildet. Dies ermöglicht es insbesondere, ein Ladegerät mit einem Anschlusskabel zu verwenden, um dieses wahlweise mit dem dritten Ladeanschluss der Ladeschale oder direkt mit dem ersten Ladeanschluss des Hartflächenreinigungs-Handgeräts zu verbinden. Die Ladeschale muss daher nicht zwingend selbst mit einem Netzteil oder dergleichen ausgestattet werden. Es genügt, für das Hartflächenreinigungssystem ein Hartflächenreinigungs-Handgerät, eine Ladeschale und ein einziges Ladegerät bereitzustellen, so dass ein Anwender wahlweise die Ladeschale oder das Ladegerät direkt in Verbindung mit dem ersten Ladeanschluss des Hartflächenreinigungs-Handgeräts nutzen kann.

Auf einfache Weise lässt sich das Batterieladegerät mit Anschlusskabel und erster Steckereinrichtung mit dem Hartflächenreinigungs-Handgerät verbinden, wenn der dritte Ladeanschluss korrespondierend zur ersten Steckereinrichtung ausgebildet ist.

Besonders stabil lässt sich das Hartflächenreinigungs-Handgerät beim Wiederaufladen seiner wiederaufladbaren Batterie abstellen, wenn die Ladeschale eine Ladeschalenunterseite aufweist, welche eine von der Gehäuseaufnahme weg weisende Ladeschalenstandfläche definiert.

Günstig ist es, wenn die Ladeschalenunterseite mindestens eine Ladeanschlussausnehmung aufweist und wenn der dritte Ladeanschluss in der mindestens einen Ladeanschlussausnehmung angeordnet oder ausgebildet ist. So kann beispielsweise die erste Steckereinrichtung des Batterieladegeräts mit dem dritten Ladeanschluss gekoppelt werden, ohne dass die erste Steckereinrichtung von der Ladeschale vorsteht. Vielmehr kann sie so in der Ladeanschlussausnehmung geschützt angeordnet werden, wenn sie mit dem dritten Ladeanschluss in Eingriff steht.

Vorteilhaft ist es, wenn der dritte Ladeanschluss zwei dritte Ladeanschlusskontakte aufweist, die parallel oder im Wesentlichen parallel zur Ladeschalenstandfläche abstehend angeordnet oder ausgebildet sind. So kann eine besonders flache Bauform der Ladeschale erreicht werden, da die erste Steckereinrichtung nicht quer oder senkrecht zur Ladeschalenstandfläche absteht, wenn sie mit dem dritten Ladeanschluss in Eingriff steht, sondern parallel zur Ladeschalenstandfläche.

Ferner ist es günstig, wenn die Ladeschale mindestens eine Anschlusskabelaussparung aufweist, durch welche ein Anschlusskabel geführt ist. Die Anschlusskabelaussparung ermöglicht es insbesondere, die erste Steckereinrichtung in die Ladeanschlussausnehmung der Ladeschale einzuführen und das Anschlusskabel durch die mindestens eine Anschlusskabelaussparung, ohne die Standfestigkeit der Ladeschale zu beeinträchtigen.

Günstig ist es, wenn die Ladeschale eine Ladeschalenseitenwand aufweist und wenn die Anschlusskabelaussparung in der Ladeschalenseitenwand angeordnet oder ausgebildet ist. Insbesondere ist es günstig, wenn die Anschlusskabelaussparung im Übergangsbereich zwischen der Ladeschalenseitenwand und der Ladeschalenunterseite angeordnet oder ausgebildet ist. So kann ein Anschlusskabel einfach und sicher durch die Anschlusskabelaussparung hindurchgeführt werden, ohne dass die Ladeschalenunterseite auf dem Anschlusskabel zu liegen kommt und dadurch eine Standfestigkeit des Hartflächenreinigungs-Handgeräts gefährdet, wenn sich dieses zum Aufladen der wiederaufladbaren Batterie in aufrechter Stellung in der Ladeschale befindet.

Vorteilhaft ist es, wenn die Ladeschale ein Batterieladefach aufweist für eine wiederaufladbare Batterie des Hartflächenreinigungs-Handgeräts. So kann in der Ladeschale nicht nur die im Hartflächenreinigungs-Handgerät angeordnete wiederaufladbare Batterie aufgeladen werden, sondern beispielsweise auch eine Ersatzbatterie. Insbesondere kann die wiederaufladbare Batterie des Hartflächenreinigungs-Handgeräts, wenn diese leer ist, aus dem Hartflächenreinigungs-Handgerät entnommen und durch die Ersatzbatterie ersetzt werden. Die leere Batterie kann dann im Batterieladefach der Ladeschale wieder aufgeladen werden während des Einsatzes des Hartflächenreinigungs-Handgeräts. So muss die Reinigung mit dem Hartflächenreinigungs-Handgerät nicht unterbrochen werden bis die Batterie im Hartflächenreinigungs-Handgerät wiederaufgeladen wird, sondern nach Austausch der leeren Batterie durch die Ersatzbatterie kann dann sofort die Reinigung fortgesetzt werden. Insbesondere kann eine Steuerungseinrichtung vorgesehen sein, die derart ausgebildet ist, dass bei einer in das Batterieladefach eingelegten Batterie und gleichzeitig eingesetztem Hartflächenreinigungs-Handgerät in die Gehäuseaufnahme zuerst die Batterie des Hartflächenreinigungs-Handgeräts geladen wird und dann erst die im Batterieladefach befindliche Batterie.

Um eine Batterie im Batterieladefach vor Verschmutzung und gegebenenfalls auch dort angeordnete Kontakte der Ladeschale zu schützen, ist es vorteilhaft, wenn die Ladeschale einen Batterieladefachdeckel zum Verschließen des Batterieladefachs aufweist.

Günstig ist es, wenn im Batterieladefach mindestens zwei elektrisch leitfähige Batterieladefachkontakte zum elektrischen Kontaktieren mit mindestens zwei Batteriekontakten der wiederaufladbaren Batterie angeordnet oder ausgebildet sind. So kann die wiederaufladbare Batterie, beispielsweise eine Ersatzbatterie, zum Aufladen ins Batterieladefach eingesetzt werden, wobei dann die Batterieladefachkontakte die Batteriekontakte berühren und so zwischen ihnen eine elektrisch leitfähige Verbindung ausgebildet wird.

Vorzugsweise sind die mindestens zwei Batterieladefachkontakte jeweils über eine elektrische Verbindungsleitung mit einem der beiden dritten Ladeanschlusskontakte des dritten Ladeanschlusses elektrisch leitend verbunden. Dies ermöglicht es, an die mindestens zwei Batterieladefachkontakte eine Ladespannung anzulegen, und zwar durch Anschließen eines Batterieladegeräts an den dritten Ladeanschluss.

Ferner ist es vorteilhaft, wenn die Ladeschale eine Ladeanschlussabdeckung für den ersten Ladeanschluss aufweist und wenn die Ladeanschlussabdeckung des ersten Ladeanschluss in einer Ladestellung des Hartflächenreinigungs-Handgeräts, in welcher das Hartflächenreinigungs-Handgerät mit seiner Gehäuseunterseite in die Gehäuseaufnahme eingreift und der zweite Ladeanschluss mechanisch und elektrisch mit der zweiten Steckereinrichtung in Wirkverbindung steht, mindestens teilweise verdeckt. Insbesondere kann die Ladeanschlussabdeckung den ersten Ladeanschluss auch vollständig verdecken. Auf diese Weise wird insbesondere sichergestellt, dass das Hartflächenreinigungs-Handgerät, wenn es sich zum Aufladen seiner wiederaufladbaren Batterie in der Ladeschale befindet, nicht zusätzlich über den ersten Ladeanschluss mit einem zweiten Ladegerät verbunden wird. Außerdem schützt die Ladeanschlussabdeckung den ersten Ladeanschluss beim Laden der Batterie des Hartflächenreinigungs-Handgeräts in der Ladeschale vor Verschmutzung.

Die nachfolgende Beschreibung bevorzugter Ausführungsformen der Erfindung dient im Zusammenhang mit den Zeichnungen der näheren Erläuterung. Es zeigen:
- Figur 1:: eine schematische perspektivische Ansicht eines Hartflächenreinigungs-Handgeräts, dessen erster Ladeanschluss mit einem Batterieladegerät verbunden ist;
- Figur 2:: eine schematische vergrößerte Ansicht des ersten Ladeanschlusses und einer ersten Steckereinrichtung des Batterieladegeräts vor dem miteinander in Eingriff bringen;
- Figur 3:: eine schematische perspektivische vergrößerte Teilansicht des Hartflächenreinigungs-Handgeräts und dessen zweiten Ladeanschlusses;
- Figur 4:: eine schematische perspektivische Gesamtansicht eines Hartflächenreinigungssystems umfassend ein Hartflächenreinigungs-Handgerät und eine Ladeanschlusseinrichtung mit Ladeschale und Batterieladegerät;
- Figur 5:: eine schematische vergrößerte perspektivische Teilansicht einer Gehäuseausnehmung der Ladeschale mit einer in einer Gehäuseaufnahme derselben angeordneten zweiten Steckereinrichtung;
- Figur 6:: eine schematische perspektivische Gesamtansicht eines Hartflächenreinigungssystems beim Laden der Batterie des Hartflächenreinigungs-Handgeräts in der Ladeschale und aufgeklapptem Batterieladefachdeckel eines zusätzlichen Batterieladefachs der Ladeschale;
- Figur 7:: eine schematische perspektivische Ansicht der Anordnung aus Figur 6 nach Entnahme des Hartflächenreinigungs-Handgeräts aus der Ladeschale;
- Figur 8:: eine schematische perspektivische Teilansicht einer Ladeschalenunterseite mit drittem Ladeanschluss und erster Steckereinrichtung vor dem in Kontakt Bringen;
- Figur 9:: eine schematische Teilansicht der Ladeschale mit aufgeklapptem Batterieladefachdeckel und entnommener Batterie;
- Figur 10:: eine schematische perspektivische Ansicht der Anordnung aus Figur 9 von der Seite; und
- Figur 11:: eine schematische perspektivische Ansicht der Anordnung aus Figur 6 mit geschlossenem Batterieladefachdeckel.

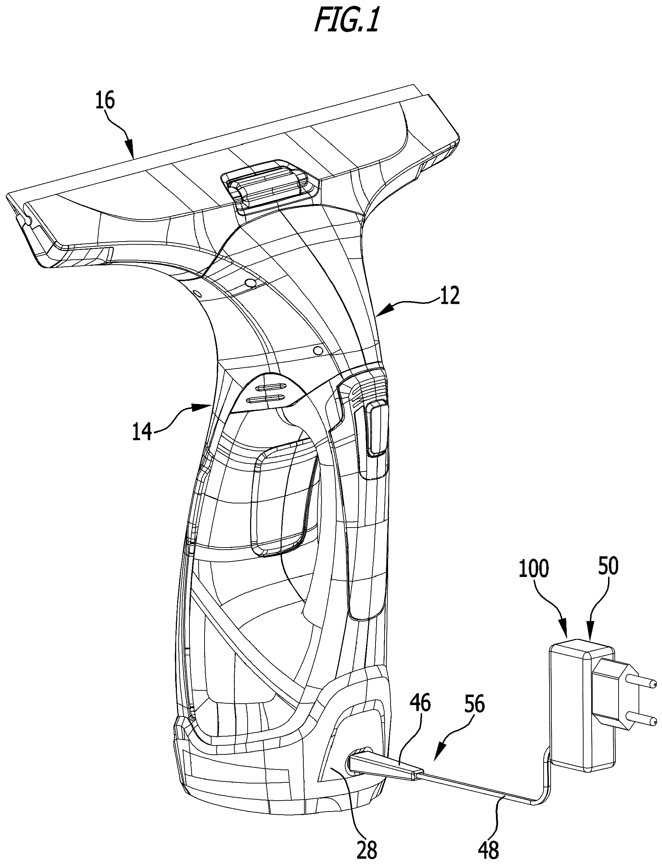

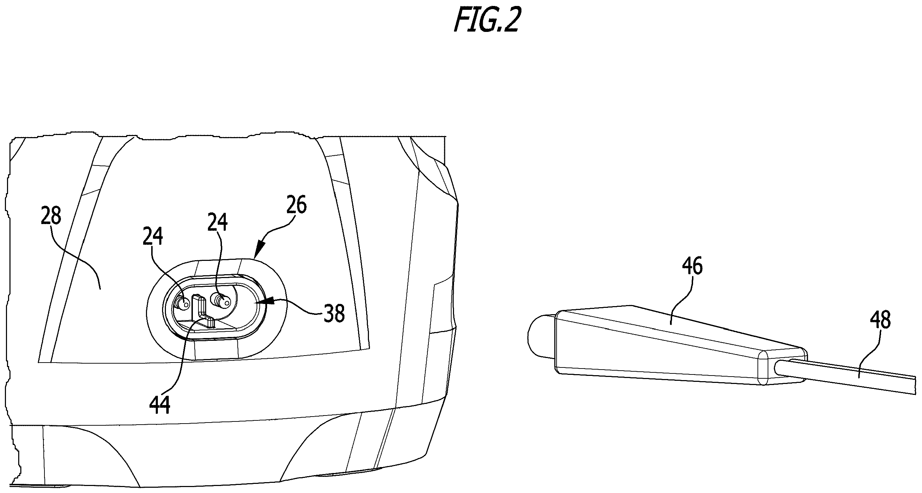

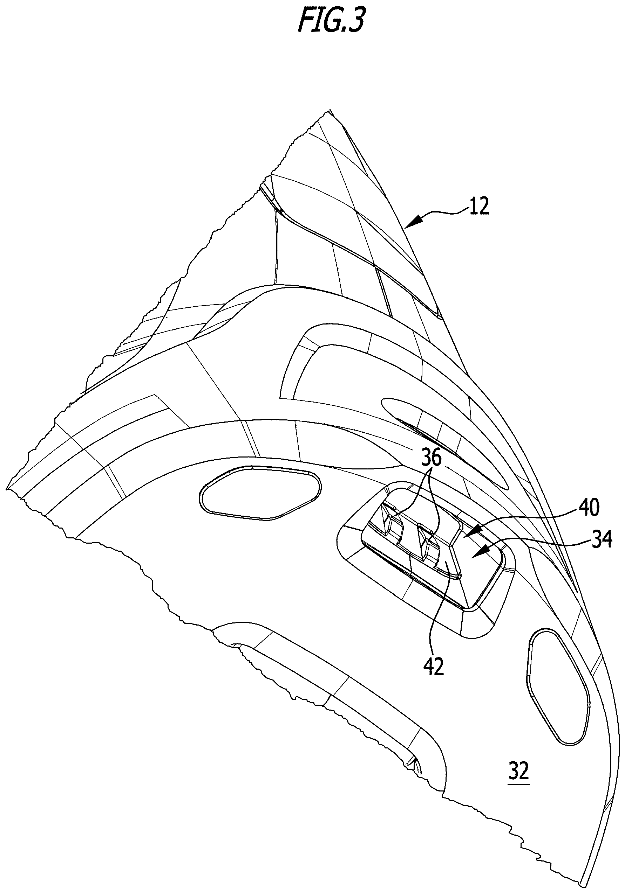

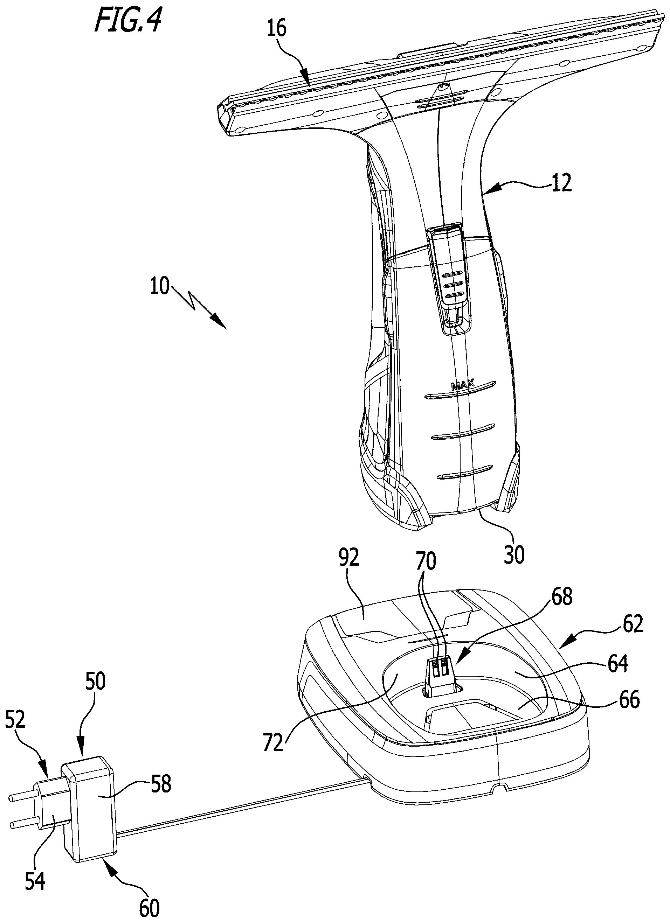

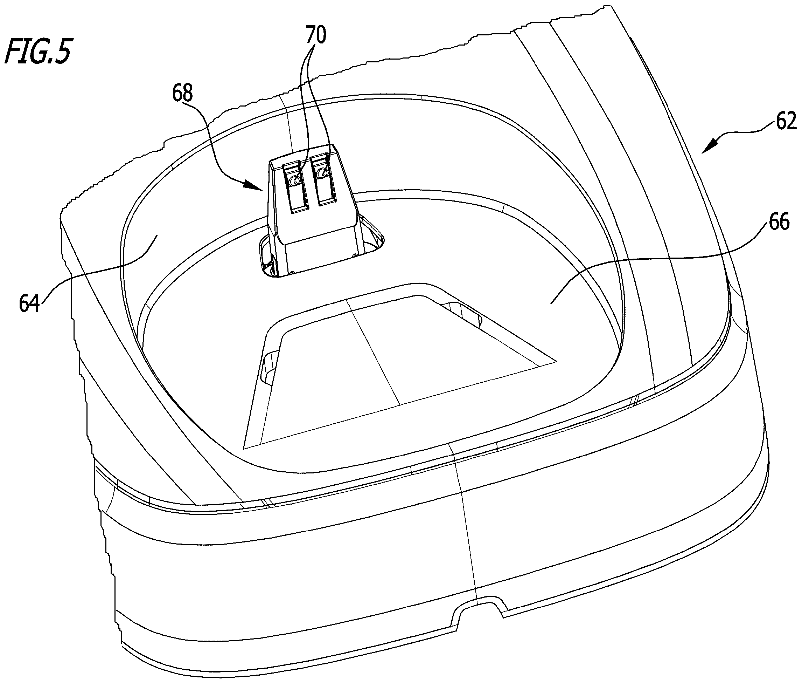

In den Figuren 1 bis 10 ist beispielhaft ein insgesamt mit dem Bezugszeichen 10 bezeichnetes Hartflächenreinigungssystem dargestellt. Es umfasst insbesondere ein Hartflächenreinigungs-Handgerät 12 mit einem Gehäuse 14, mit einer in diesem angeordneten, in den Figuren nicht dargestellten, Absaugeinrichtung, die mit einer Saugdüse 16 zusammenwirkt, und mit einer wiederaufladbaren Batterie zum Versorgen der Absaugeinrichtung mit elektrischer Energie. Ein detaillierter Aufbau des Hartflächenreinigungs-Handgeräts 12 ist beispielsweise in der EP 2 227 126 B1 beschrieben.

Zum Wiederaufladen der in ein Batteriefach 20 des Gehäuses 14 eingesetzten Batterie 18 dienen insbesondere zwei in den Figuren nicht dargestellte, elektrisch leitfähige Batteriefachkontakte zum elektrischen Kontaktieren korrespondierender Batteriekontakte 22 der Batterie 18. Die Batteriekontakte 22 sind jeweils über eine in den Figuren nicht dargestellte elektrische Verbindungsleitung mit zwei ersten Ladeanschlusskontakten 24 eines ersten Ladeanschlusses 26 elektrisch leitend verbunden. Der erste Ladeanschluss 26 ist in einer rückwärtigen Gehäuseseite 28 ausgebildet, welche quer, im Wesentlichen senkrecht, zu einer Gehäuseunterseite 30 des Gehäuses 14 verläuft. Die Gehäuseunterseite 30 definiert eine Standfläche 32 zum aufrechten Abstellen des Hartflächenreinigungs-Handgeräts 12, wie beispielhaft in Figur 1 dargestellt.

In der Gehäuseunterseite 30 ist ein zweiter Ladeanschluss 34 angeordnet, welcher zwei zweite Ladeanschlusskontakte 36 aufweist. Der zweite Ladeanschluss 34 und der erste Ladeanschluss 26 weisen eine voneinander abweichende Form auf, so dass nur mit unterschiedlichen, jeweils korrespondierend ausgebildeten Steckereinrichtungen in Form von Steckverbindern in Eingriff gebracht werden können.

Der erste Ladeanschluss 26 ist in Form einer ersten Ladeanschlusssteckbuchse 38 ausgebildet, wobei die ersten Ladeanschlusskontakte 24 elektrisch leitend und gegeneinander isoliert sowie parallel oder im Wesentlichen parallel zur Standfläche 32 abstehend angeordnet oder ausgebildet sind.

Der zweite Ladeanschluss 34 ist in Form einer zweiten Ladeanschlusssteckbuchse 40 ausgebildet, wobei die zweiten Ladeanschlusskontakte 36 elektrisch leitend und gegeneinander isoliert ausgebildet sind. Die zweite Ladeanschlusssteckbuchse 40 ist von der Gehäuseunterseite 30 weg weisend geöffnet und die zweiten Ladeanschlusskontakte 36 von einer inneren Wandfläche 42 der zweiten Ladeanschlusssteckbuchse 40 vorstehend ausgebildet.

Die ersten und zweiten Ladeanschlusskontakte 24 und 36 stehen weder über die Gehäuseunterseite 30 noch über die Gehäuseseite 28 vor.

In der ersten Ladeanschlusssteckbuchse 38 ist zwischen den ersten Ladeanschlusskontakten 24 ein L-förmiger, einen Rastkörper 44 bildender Vorsprung angeordnet, welcher korrespondierend zu einer entsprechenden Ausnehmung an einer ersten Steckereinrichtung 46, welche ein erstes Ende eines zweiadrigen Anschlusskabels 48 bildet, ausgebildet, so dass die erste Steckereinrichtung 46 in eindeutig definierter Weise mechanisch und elektrisch leitend mit dem ersten Ladeanschluss 26 in Eingriff gebracht werden kann, wie dies beispielhaft in Figur 1 dargestellt ist.

Das Anschlusskabel 48 ist mit einem eine Ladevorrichtung 100 bildenden Batterieladegerät 50, das insbesondere Bestandteil des Hartflächenreinigungssystems 10 sein kann, elektrisch leitend verbunden. Das Batterieladegerät 50 umfasst eine Netzanschlusseinrichtung 52, beispielsweise in Form eines Eurosteckers 54 oder eines Schutzkontaktsteckers, zum Verbinden mit einem Stromnetz. Das Anschlusskabel 48 mit der ersten Steckereinrichtung 46 bildet einen Teil einer Ladeanschlusseinrichtung 56 des Batterieladegeräts 50.

Das Batterieladegerät 50 umfasst beispielsweise ein in einem Gehäuse 58 angeordnetes Schaltnetzteil oder ist in Form eines Schaltnetzteils ausgebildet. Wie beispielhaft in den Figuren dargestellt, kann das Schaltnetzteil in Form eines Steckerschaltnetzteils 60 ausgebildet sein zum direkten Verbinden mit dem Stromnetz.

Der erste Ladeanschluss 26 und der zweite Ladeanschluss 34 sind elektrisch parallel geschaltet. Dies bedeutet insbesondere, dass jeder der beiden ersten Ladeanschlusskontakte 24 mit einem der beiden zweiten Ladeanschlusskontakte 36 elektrisch leitend verbunden ist.

Das Batteriefach 20 kann optional auch einen Batteriefachdeckel zum Verschließen desselben aufweisen. Dieser kann vollständig entfernbar oder beispielsweise verschiebbar und/oder verschwenkbar am Gehäuse 14 angeordnet oder ausgebildet sein.

Das Hartflächenreinigungssystem 10 umfasst ferner eine Ladeschale 62 mit einer Gehäuseaufnahme 64 zum mindestens teilweisen Aufnehmen des Hartflächenreinigungs-Handgeräts 12 in aufrechter Stellung. Ein Boden der Gehäuseaufnahme 64 bildet eine Aufstandsfläche 66 für die Gehäuseunterseite 30.

In der Gehäuseaufnahme 64 ist eine zweite Steckereinrichtung 68 angeordnet beziehungsweise ausgebildet, die quer zur Aufstandsfläche 66, insbesondere senkrecht, von dieser vorstehend ausgebildet ist. Die zweite Steckereinrichtung 68 ist korrespondierend zum zweiten Ladeanschluss 34 ausgebildet.

Die zweite Steckereinrichtung 68 weist zwei zweite Steckerkontakte 70 auf, die bei dem in die Ladeschale 62 eingesetzten Hartflächenreinigungs-Handgerät 12 die beiden zweiten Ladeanschlusskontakte 36 berühren und eine elektrisch leitfähige Verbindung herstellen.

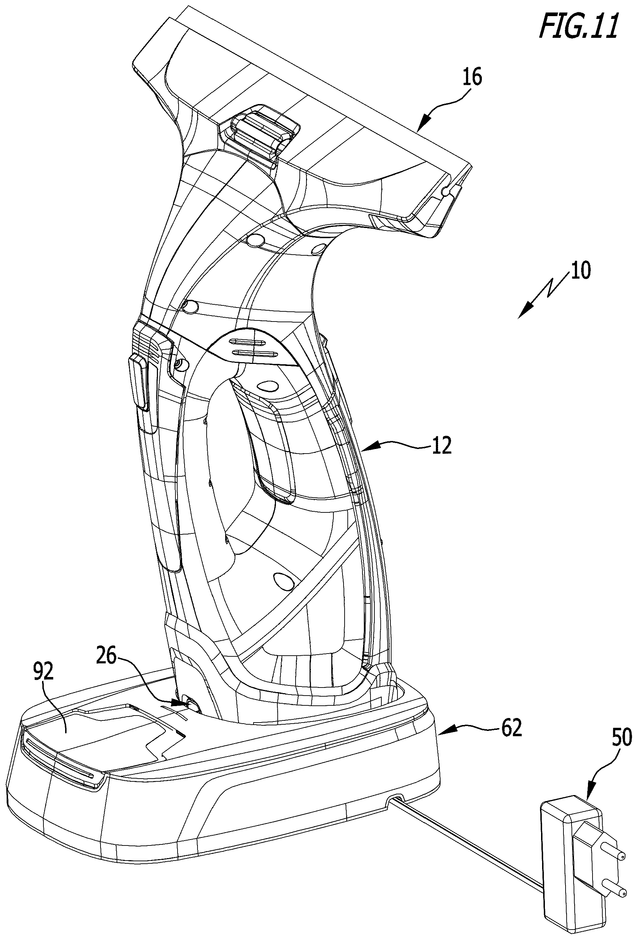

Wie beispielhaft in Figur 11 zu erkennen, befindet sich der erste Ladeanschluss 26 nahezu vollständig innerhalb der Gehäuseaufnahme 64 und wird somit durch eine innere Wandfläche 72 der Gehäuseaufnahme 64 im Wesentlichen verdeckt. Diese bildet somit eine Ladeanschlussabdeckung 98 zum Verdecken oder Abdecken des ersten Ladeanschlusses. So wird verhindert, dass der erste Ladeanschluss 26, wenn das Hartflächenreinigungs-Handgerät 12 in die Ladeschale 62 hineingestellt ist, gleichzeitig noch mit der ersten Steckereinrichtung 46 verbunden werden kann.

Die Ladeschale 62 weist eine Ladeschalenunterseite 74 auf. Diese weist in entgegengesetzter Richtung wie die Gehäuseaufnahme 64 und definiert eine Ladeschalenstandfläche 76. Die Ladenschalenunterseite 74 weist ferner mindestens eine Ladeanschlussausnehmung 78 auf, in welcher ein dritter Ladeanschluss 80 angeordnet beziehungsweise ausgebildet ist.

Der dritte Ladeanschluss 80 ist korrespondierend zur ersten Steckereinrichtung 46 ausgebildet und weist zwei dritte Ladeanschlusskontakte 82 auf, die elektrisch leitend mit den zweiten Steckerkontakten 70 der zweiten Steckereinrichtung 68 elektrisch leitend verbunden sind. Insbesondere kann der dritte Ladeanschluss 80 zusammen mit der zweiten Steckereinrichtung 68 in Form eines als ein einziges an der Ladeschale 62 befestigbares, insbesondere anclipbares Bauteil ausgebildet sein. Dieses Bauteil kann insbesondere derart aufgebaut sein, dass die dritten Ladeanschlusskontakte 82 und die zweiten Steckerkontakte 70 quer zueinander abstehen, insbesondere senkrecht zueinander. Eine elektrisch leitfähige Verbindung zwischen den dritten Ladeanschlusskontakte 82 und den zweiten Steckerkontakten 70 kann insbesondere über flache Blechstreifen oder Leiterbahnen realisiert werden, die in das Bauteil integriert, beispielsweise eingegossen oder umspritzt sind. Ferner kann an diesem Bauteil, das vorzugsweise in eine entsprechende Durchbrechung der Ladeschale 62 einsetzbar ist, auch ein umlaufendes Dichtelement ausgebildet oder gehalten sein, um mit dem Bauteil gleichzeitig auch die Durchbrechung abzudichten. Beispielsweise könnte dies eine vorspringende, flanschartige Dichtkontur sein, die einstückig mit dem Bauteil ausgebildet ist.

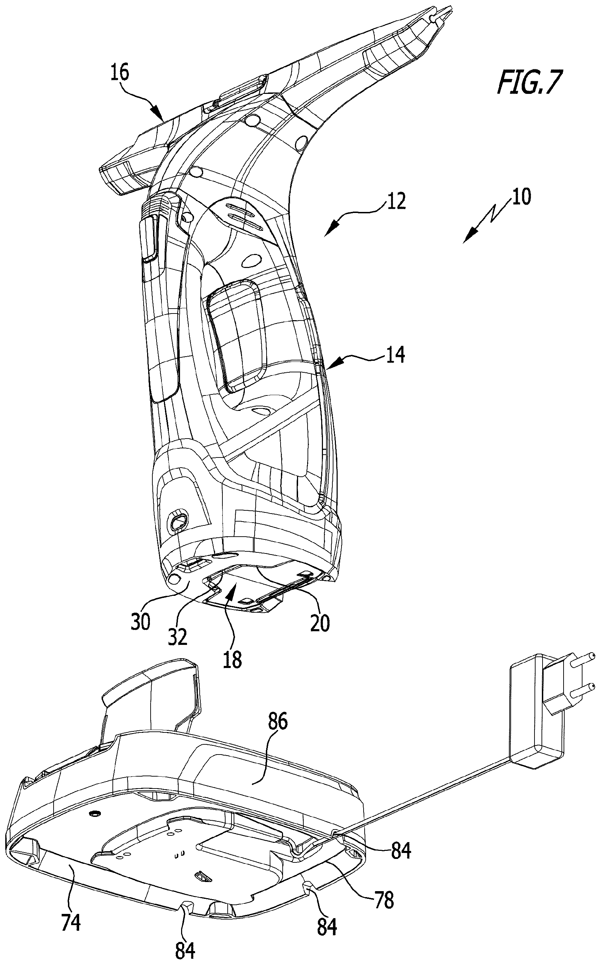

Diese besondere Ausgestaltung des dritten Ladeanschlusses 80 ermöglicht es, die erste Steckereinrichtung 46 des Batterieladegeräts 50 nicht nur mit dem ersten Ladeanschluss 26 zu verbinden, sondern wahlweise auch, wie beispielsweise in Figur 7 schematisch dargestellt, mit dem dritten Ladeanschluss 80.

Die dritten Ladeanschlusskontakte 82 sind parallel oder im Wesentlichen parallel zur Ladeschalenstandfläche 76 abstehend angeordnet oder ausgebildet, so dass auch die erste Steckereinrichtung 46, wenn sie mit dem dritten Ladeanschluss 80 in Eingriff steht, im Wesentlichen parallel zur Ladeschalenstandfläche 76 ausgerichtet ist.

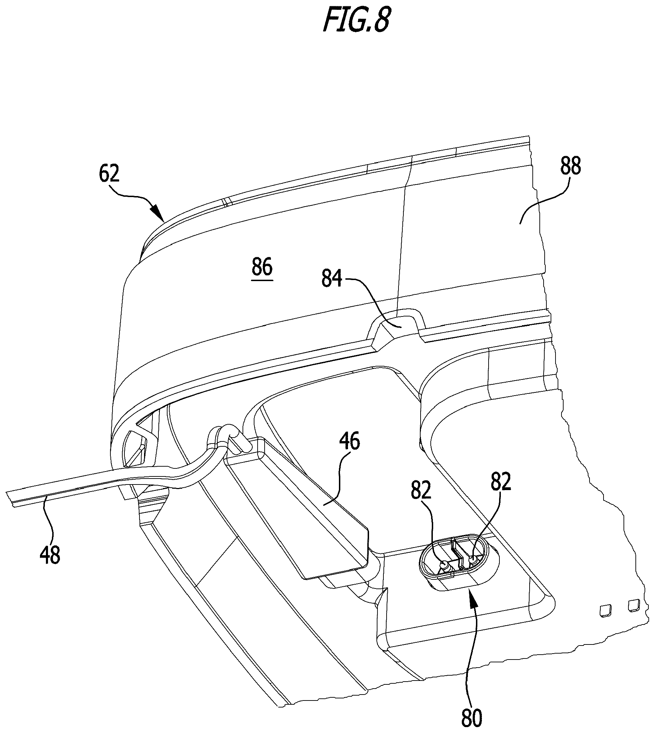

An der Ladeschale 62 sind insgesamt drei Anschlusskabelaussparungen 84 ausgebildet, die es ermöglichen, das Anschlusskabel 48 durch eine Ladeschalenseitenwand 86 der Ladeschale 62 durchzuführen. Wie beispielsweise in den Figuren 7 und 8 gut zu erkennen, sind die Anschlusskabelaussparungen 84 jeweils im Übergangsbereich zwischen der Ladeschalenseitenwand 86 und der Ladeschalenunterseite 74 angeordnet beziehungsweise ausgebildet.

Um eine im Wesentlichen beliebige Orientierung der Ladeschale 62 zu ermöglichen, sind die drei Anschlusskabelaussparungen 84 auf unterschiedlichen Seiten des im Wesentlichen quaderförmigen Ladeschalengehäuses 88 ausgebildet.

Die Ladeschale 62 weist ferner ein Batterieladefach 90 auf zum Aufnehmen einer wiederaufladbaren Batterie 18 des Hartflächenreinigungs-Handgeräts 12. Das Batterieladefach 90 ist korrespondierend zur Batterie 18 geformt, so dass diese im Wesentlichen formschlüssig in das Batterieladefach 90 eingesetzt werden kann.

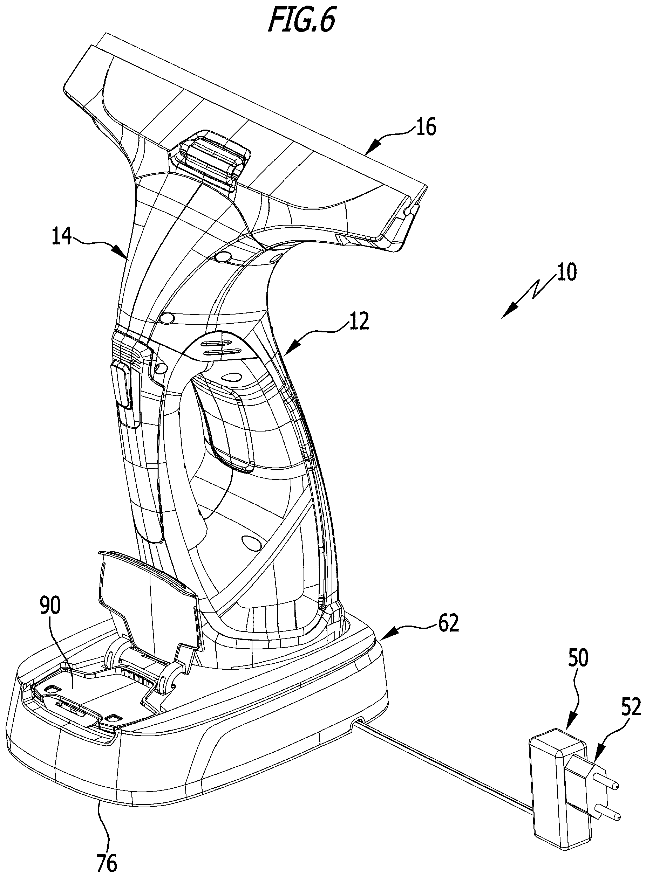

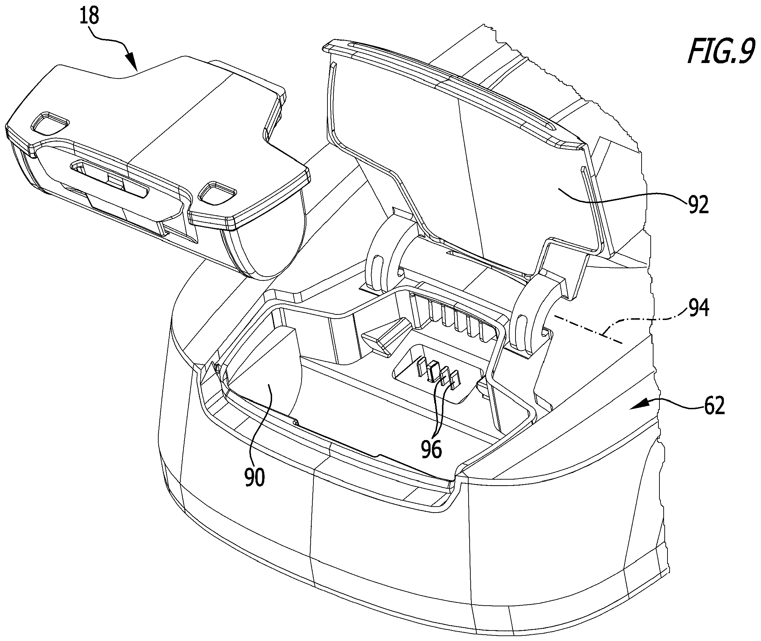

In Figur 6 ist schematisch dargestellt, wie die Batterie 18 in das Batterieladefach 90 eingesetzt ist, in Figur 9 ist die Batterie 18 vor dem Einsetzen in das Batterieladefach 90 dargestellt.

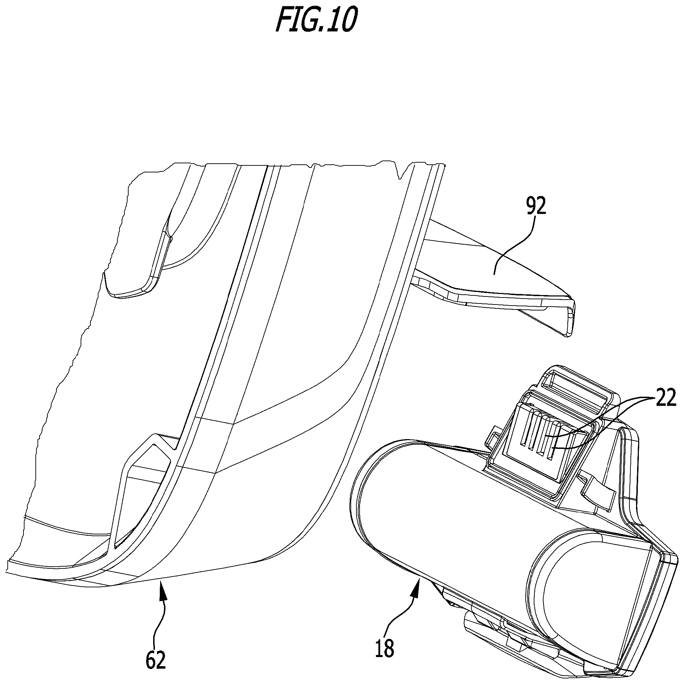

Zum Verschließen des Batterieladefachs 90 dient ein an der Ladeschale 62 um eine Schwenkachse 94 verschwenkbar gelagerter Batterieladefachdeckel 92. In Figur 9 ist das Batterieladefach 90 schematisch mit geöffnetem Batterieladefachdeckel 92 dargestellt, in Figur 10 schematisch mit geschlossenem Batterieladefachdeckel 92.

Im Batterieladefach 90 sind elektrisch leitfähige Batterieladefachkontakte 96 zum elektrischen Kontaktieren der Batteriekontakte 22 angeordnet, um eine elektrische Verbindung herzustellen, wenn die Batterie 18 in das Batterieladefach 90 eingesetzt ist. Die Ausgestaltung und Anordnung der Batterieladefachkontakte 96 entspricht der Ausgestaltung und Anordnung der in den Figuren nicht dargestellten Batteriefachkontakten im Batteriefach 20 des Gehäuses 14. Dies ermöglicht es, die Batterie 18 aus dem Batteriefach 20 des Gehäuses 14 zu entnehmen und zum Laden in das Batterieladefach 90 der Ladeschale 62 einzusetzen.

Aufgrund der nicht rotationssymmetrischen Ausgestaltung der Batterie 18 sowie dies Batteriefachs 20 und des Batterieladefachs 90 ist eine eindeutige Kontaktierung der Batteriekontakte 22 mit den Batteriefachkontakten des Batteriefachs 20 beziehungsweise mit den Batterieladefachkontakten 96 des Batterieladefachs 90 gewährleistet.

Die dritten Ladeanschlusskontakte 82 sind parallel geschaltet mit den Batterieladefachkontakten 96 und mit den zweiten Steckerkontakten 70 elektrisch leitend verbunden.

Das Hartflächenreinigungssystem 10 umfasst optional eine Steuerungseinrichtung, die wahlweise im Batterieladegerät 50, im Hartflächenreinigungs-Handgerät 12 oder in der Ladeschale 62 angeordnet sein kann und insbesondere sicherstellt, dass bei gleichzeitig eingesetzter Batterie 18 in das Batterieladefach 90 und in die Gehäuseaufnahme 64 eingesetztem Hartflächenreinigungs-Handgerät 12 zunächst die im Batteriefach 20 des Hartflächenreinigungs-Handgeräts 12 angeordnete Batterie 18 geladen wird und die im Batterieladefach 90 angeordnete Batterie 18 entweder erst dann aufgeladen wird, wenn die im Hartflächenreinigungs-Handgerät 12 eingesetzte Batterie 18 vollständig geladen ist oder wenn das Hartflächenreinigungs-Handgerät 12 aus der Ladeschale 62 entnommen wird.

### Bezugszeichenliste

- 10: Hartflächenreinigungssystem
- 12: Hartflächenreinigungs-Handgerät
- 14: Gehäuse
- 16: Saugdüse
- 18: Batterie
- 20: Batteriefach
- 22: Batteriekontakt
- 24: erster Ladeanschlusskontakt
- 26: erster Ladeanschluss
- 28: Gehäuseseite
- 30: Gehäuseunterseite
- 32: Standfläche
- 34: zweiter Ladeanschluss
- 36: zweiter Ladeanschlusskontakt
- 38: erste Ladeanschlusssteckbuchse
- 40: zweite Ladeanschlusssteckbuchse
- 42: Wandfläche
- 44: Rastkörper
- 46: erste Steckereinrichtung
- 48: Anschlusskabel
- 50: Batterieladegerät
- 52: Netzanschlusseinrichtung
- 54: Eurostecker
- 56: Ladeanschlusseinrichtung
- 58: Gehäuse
- 60: Steckerschaltnetzteil
- 62: Ladeschale
- 64: Gehäuseaufnahme
- 66: Aufstandsfläche
- 68: zweite Steckereinrichtung
- 70: zweiter Steckerkontakt
- 72: Wandfläche
- 74: Ladeschalenunterseite
- 76: Ladeschalenstandfläche
- 78: Ladeanschlussausnehmung
- 80: dritter Ladeanschluss
- 82: dritter Ladeanschlusskontakt
- 84: Anschlusskabelaussparung
- 86: Ladeschalenseitenwand
- 88: Ladeschalengehäuse
- 90: Batterieladefach
- 92: Batterieladefachdeckel
- 94: Schwenkachse
- 96: Batterieladefachkontakt
- 98: Ladeanschlussabdeckung
- 100: Ladevorrichtung

## Patentansprüche

1. Hartflächenreinigungs-Handgerät (12) mit einer Absaugeinrichtung, einer mit der Absaugeinrichtung zusammenwirkenden Saugdüse (16), einer wiederaufladbaren Batterie (18) zum Versorgen der Absaugeinrichtung mit elektrischer Energie und einem mit der wiederaufladbaren Batterie (18) verbundenen ersten Ladeanschluss (26) zum Verbinden mit einer Ladevorrichtung (100), **gekennzeichnet durch** einen zweiten, mit der wiederaufladbaren Batterie (18) verbundenen Ladeanschluss (34) zum Verbinden mit einer Ladevorrichtung (100).

2. Hartflächenreinigungs-Handgerät nach Anspruch 1, **gekennzeichnet durch** ein Gehäuse (14) mit einer Gehäuseunterseite (30), welche eine Standfläche (32) zum Aufrechten Abstellen des Hartflächenreinigungs-Handgeräts (12) definiert, und mit mindestens einer quer zur Gehäuseunterseite (30) verlaufenden Gehäuseseite (28), wobei
a) der erste Ladeanschluss (26) in der mindestens einen Gehäuseseite (28) angeordnet oder ausgebildet ist
und/oder
b) der zweite Ladeanschluss (34) in der Gehäuseunterseite (30) angeordnet oder ausgebildet ist.

3. Hartflächenreinigungs-Handgerät nach einem der voranstehenden Ansprüche, **dadurch gekennzeichnet, dass** der erste Ladeanschluss (26) in Form einer ersten Ladeanschlusssteckbuchse (40) mit mindestens zwei elektrisch leitenden und gegeneinander isolierten ersten Ladeanschlusskontakten (24) ausgebildet ist und/oder dass der zweite Ladeanschluss (34) in Form einer zweiten Ladeanschlusssteckbuchse (40) mit mindestens zwei elektrisch leitenden und gegeneinander isolierten zweiten Ladeanschlusskontakten (36) ausgebildet ist.

4. Hartflächenreinigungs-Handgerät nach Anspruch 3, **dadurch gekennzeichnet,**
a) **dass** die ersten Ladeanschlusskontakte (24) parallel oder im Wesentlichen parallel zur Standfläche (32) abstehend angeordnet oder ausgebildet sind
und/oder
b) **dass** die ersten und/oder zweiten Ladeanschlusskontakte (24; 36) nicht über die Gehäuseunterseite (30) und/oder über die Gehäuseseite (28) vorstehen.

5. Hartflächenreinigungs-Handgerät nach einem der voranstehenden Ansprüche, **dadurch gekennzeichnet, dass** der erste Ladeanschluss (26) und der zweite Ladeanschluss (34) elektrisch parallel geschaltet sind.

6. Hartflächenreinigungs-Handgerät nach einem der voranstehenden Ansprüche, **gekennzeichnet durch** ein Batteriefach (20) für die wiederaufladbare Batterie (18).

7. Hartflächenreinigungs-Handgerät nach Anspruch 6, **gekennzeichnet**
a) **durch** einen Batteriefachdeckel zum Verschließen des Batteriefachs (20)
und/oder
b) **dadurch**, dass im Batteriefach (20) mindestens zwei elektrisch leitfähige Batteriefachkontakte zum elektrischen Kontaktieren mit mindestens zwei Batteriekontakten (22) der wiederaufladbaren Batterie (18) angeordnet oder ausgebildet sind und dass die mindestens zwei Batteriefachkontakte jeweils über eine elektrische Verbindungsleitung mit einem der beiden ersten Ladeanschlusskontakte (24) des ersten und einem der beiden zweiten Ladeanschlusskontakte (36) des zweiten Ladeanschlusses (34) elektrisch leitend verbunden sind.

8. Hartflächenreinigungs-Handgerät nach einem der voranstehenden Ansprüche, **dadurch gekennzeichnet, dass** der erste Ladeanschluss (26) und der zweite Ladeanschluss (34) eine voneinander abweichende Form aufweisen.

9. Hartflächenreinigungssystem (10) umfassend ein Hartflächenreinigungs-Handgerät (12) nach einem der voranstehenden Ansprüche und Ladevorrichtung (100) in Form mindestens eines Batterieladegeräts (50), welches eine Netzanschlusseinrichtung (52) zum Verbinden mit einem Stromnetz und eine Ladeanschlusseinrichtung (56) aufweist, welche ausgebildet ist zum mechanischen und elektrischen Verbinden mit dem ersten und/oder dem zweiten Ladeanschluss (26; 34).

10. Hartflächenreinigungssystem nach Anspruch 9, **dadurch gekennzeichnet,**
a) **dass** die Ladeanschlusseinrichtung (56) ein Anschlusskabel (48) mit einer ersten Steckereinrichtung (46) umfasst und dass die erste Steckereinrichtung (46) ausgebildet ist zum mechanischen und elektrischen Verbinden mit dem ersten oder dem zweiten Ladeanschluss (26; 34)
und/oder
b) **dass** das Batterieladegerät (50) ein Schaltnetzteil umfasst oder in Form eines Schaltnetzteils ausgebildet ist,
wobei insbesondere
das Schaltnetzteil in Form eines Steckerschaltnetzteils (60) ausgebildet ist zum Verbinden mit dem Stromnetz.

11. Hartflächenreinigungssystem nach Anspruch 9 oder 10, **dadurch gekennzeichnet, dass** die Ladeanschlusseinrichtung (56) eine Ladeschale (62) mit einer Gehäuseaufnahme (64) zum mindestens teilweisen Aufnehmen des Hartflächenreinigungs-Handgeräts (12) in aufrechter Stellung umfasst.

12. Hartflächenreinigungssystem nach Anspruch 11, **dadurch gekennzeichnet,**
a) **dass** die Ladeschale (62) eine zweite Steckereinrichtung (68) aufweist und dass die zweite Steckereinrichtung (68) korrespondierend zum zweiten Ladeanschluss (34) ausgebildet ist,
wobei insbesondere
die Gehäuseaufnahme (64) eine Aufstandsfläche (66) für die Gehäuseunterseite (30) aufweist und dass die zweite Steckereinrichtung (68) von der Aufstandsfläche (66) vorstehend angeordnet oder ausgebildet ist
und/oder
b) **dass** die Ladeschale (62) einen dritten Ladeanschluss (80) aufweist, welcher elektrisch leitend mit der zweiten Steckereinrichtung (68) verbunden ist,
wobei insbesondere
b1) der dritte Ladeanschluss (80) und der erste Ladeanschluss (26) identisch oder im Wesentlichen identisch ausgebildet sind
und/oder
b2) der dritte Ladeanschluss (80) korrespondierend zur ersten Steckereinrichtung (46) ausgebildet ist.

13. Hartflächenreinigungssystem nach Anspruch 11 oder 12, **dadurch gekennzeichnet, dass** die Ladeschale (62) eine Ladeschalenunterseite (74) aufweist, welche eine von der Gehäuseaufnahme (64) weg weisende Ladeschalenstandfläche (76) definiert,
wobei insbesondere
a) die Ladeschalenunterseite mindestens eine Ladeanschlussausnehmung (78) aufweist und der dritte Ladeanschluss (80) in der mindestens einen Ladeanschlussausnehmung (78) angeordnet oder ausgebildet ist
und/oder
b) der dritte Ladeanschluss (80) zwei dritte Ladeanschlusskontakte (82) aufweist, die parallel oder im Wesentlichen parallel zur Ladeschalenstandfläche (76) abstehend angeordnet oder ausgebildet sind.

14. Hartflächenreinigungssystem nach einem der Ansprüche 11 bis 13, **dadurch gekennzeichnet, dass** die Ladeschale (62) mindestens eine Anschlusskabelaussparung (84) aufweist, durch welche ein Anschlusskabel (48) geführt ist,
wobei insbesondere
die Ladeschale (62) eine Ladeschalenseitenwand (86) aufweist und dass die Anschlusskabelaussparung (84) in der Ladeschalenseitenwand (86) angeordnet oder ausgebildet, insbesondere im Übergangsbereich zur Ladeschalenunterseite (74).

15. Hartflächenreinigungssystem nach einem der Ansprüche 11 bis 14, **dadurch gekennzeichnet,**
a) **dass** die Ladeschale (62) ein Batterieladefach (90) aufweist für eine wiederaufladbare Batterie (18) des Hartflächenreinigungs-Handgeräts (12),
wobei insbesondere
a1) die Ladeschale (62) einen Batterieladefachdeckel (92) zum Verschließen des Batterieladefachs (90) aufweist und/oder
a2) im Batterieladefach (90) mindestens zwei elektrisch leitfähige Batterieladefachkontakte (96) zum elektrischen Kontaktieren mit mindestens zwei Batteriekontakten (22) der wiederaufladbaren Batterie (18) angeordnet oder ausgebildet sind, wobei weiter insbesondere
die mindestens zwei Batterieladefachkontakte (96) jeweils über eine elektrische Verbindungsleitung mit einem der beiden dritten Ladeanschlusskontakte (82) des dritten Ladeanschlusses (80) elektrisch leitend verbunden sind,
und/oder
b) **dass** die Ladeschale (62) einen Ladeanschlussabdeckung (98) für den ersten Ladeanschluss (26) aufweist und dass die Ladeanschlussabdeckung (98) den ersten Ladeanschluss (26) in einer Ladestellung des Hartflächenreinigungs-Handgeräts (12), in welcher das Hartflächenreinigungs-Handgerät (12) mit seiner Gehäuseunterseite (30) in die Gehäuseaufnahme (64) eingreift und der zweite Ladeanschluss (34) mechanisch und elektrisch mit der zweiten Steckereinrichtung (68) in Wirkverbindung steht, mindestens teilweise, insbesondere vollständig, verdeckt.

## Claims

1. Hand-held cleaning appliance for hard surfaces (12) having a suction device, a suction nozzle (16) which is cooperative with the suction device, a rechargeable battery (18) for supplying the suction device with electrical energy, and a first charging connector (26), which is connected to the rechargeable battery (18), for connecting to a charging apparatus (100), **characterized by** a second charging connector (34), which is connected to the rechargeable battery (18), for connecting to a charging apparatus (100).

2. Hand-held cleaning appliance for hard surfaces in accordance with Claim 1, **characterized by** a housing (14) having a housing underside (30) which defines a standing surface (32) for placing the hand-held cleaning appliance for hard surfaces (12) upright, and having at least one housing side (28) running transversely to the housing underside (30), wherein
a) the first charging connector (26) is arranged or formed in the at least one housing side (28)
and/or
b) the second charging connector (34) is arranged or formed in the housing underside (30)

3. Hand-held cleaning appliance for hard surfaces in accordance with any one of the preceding Claims, **characterized in that** the first charging connector (26) is configured in the form of a first charging connector plug socket (40) having at least two first charging connector contacts (24) which are electrically conductive and are insulated from each other, and/or **in that** the second charging connector (34) is configured in the form of a second charging connector plug socket (40) having at least two second charging connector contacts (36) which are electrically conductive and are insulated from each other.

4. Hand-held cleaning appliance for hard surfaces in accordance with Claim 3, **characterized in that**
a) the first charging connector contacts (24) are arranged or formed protruding parallel or substantially parallel to the standing surface (32)
and/or
b) the first and/or second charging connector contacts (24; 36) do not project over the housing underside (30) and/or over the housing side (28).

5. Hand-held cleaning appliance for hard surfaces in accordance with any one of the preceding Claims, **characterized in that** the first charging connector (26) and the second charging connector (34) are connected electrically in parallel.

6. Hand-held cleaning appliance for hard surfaces in accordance with any one of the preceding Claims, **characterized by** a battery compartment (20) for the rechargeable battery (18).

7. Hand-held cleaning appliance for hard surfaces in accordance with Claim 6, **characterized**
a) **by** a battery compartment cover for closing the battery compartment (20)
and/or
b) in that at least two electrically conductive battery compartment contacts for electrically contacting at least two battery contacts (22) of the rechargeable battery (18) are arranged or formed in the battery compartment (20), and in that the at least two battery compartment contacts are each connected in an electrically conductive manner via an electrical connecting line to one of the two first charging connector contacts (24) of the first and to one of the two second charging connector contacts (36) of the second charging connector (34).

8. Hand-held cleaning appliance for hard surfaces in accordance with any one of the preceding Claims, **characterized in that** the first charging connector (26) and the second charging connector (34) have a mutually different form.

9. Cleaning system for hard surfaces (10), comprising a hand-held cleaning appliance for hard surfaces (12) in accordance with any one of the preceding Claims, and charging apparatus (100) in the form of at least one battery charging appliance (50) which has a mains connecting device (52) for connecting to a power grid and has a charging connector device (56) which is configured to mechanically and electrically connect to the first and/or the second charging connector (26; 34).

10. Cleaning system for hard surfaces in accordance with Claim 9, **characterized**
a) **in that** the charging connector device (56) comprises a connecting cable (48) having a first plug device (46), and in that the first plug device (46) is configured to mechanically and electrically connect to the first or the second charging connector (26; 34)
and/or
b) **in that** the battery charging appliance (50) comprises a switched-mode power supply or is configured in the form of a switched-mode power supply,
wherein in particular
the switched-mode power supply is configured in the form of a plug-in switched-mode power supply (60) for connecting to the power grid.

11. Cleaning system for hard surfaces in accordance with either Claim 9 or 10, **characterized in that** the charging connector device (56) comprises a charging cradle (62) having a housing receiver (64) for at least partially accommodating the hand-held cleaning appliance for hard surfaces (12) in upright position.

12. Cleaning system for hard surfaces in accordance with Claim 11, **characterized**
a) **in that** the charging cradle (62) has a second plug device (68), and in that the second plug device (68) is formed corresponding to the second charging connector (34),
wherein in particular
the housing receiver (64) has a contact surface (66) for the housing underside (30), and in that the second plug device (68) is arranged or formed projecting from the contact surface (66)
and/or
b) **in that** the charging cradle (62) has a third charging connector (80) which is connected to the second plug device (68) in an electrically conductive manner,
wherein in particular
b1) the third charging connector (80) and the first charging connector (26) are identically or substantially identically formed
and/or
b2) the third charging connector (80) is formed corresponding to the first plug device (46).

13. Cleaning system for hard surfaces in accordance with either Claim 11 or 12, **characterized in that** the charging cradle (62) has a charging cradle underside (74) which defines a charging cradle standing surface (76) facing away from the housing receiver (64),
wherein in particular
a) the charging cradle underside has at least one charging connector opening (78) and the third charging connector (80) is arranged or formed in the at least one charging connector opening (78)
and/or
b) the third charging connector (80) has two third charging connector contacts (82) that are arranged or formed protruding parallel or substantially parallel to the charging cradle standing surface (76).

14. Cleaning system for hard surfaces in accordance with any one of Claims 11 to 13, **characterized in that** the charging cradle (62) has at least one connecting cable cutout (84) through which a connecting cable (48) is guided,
wherein in particular
the charging cradle (62) has a charging cradle side wall (86), and **in that** the connecting cable cutout (84) is arranged or formed in the charging cradle side wall (86), in particular in the transition region to the charging cradle underside (74).

15. Cleaning system for hard surfaces in accordance with any one of Claims 11 to 14, **characterized in that**
a) the charging cradle (62) has a battery charging compartment (90) for a rechargeable battery (18) of the hand-held cleaning appliance for hard surfaces (12), wherein in particular
a1) the charging cradle (62) has a battery charging compartment cover (92) for closing the battery charging compartment (90)
and/or
a2) in the battery charging compartment (90) are arranged or formed at least two electrically conductive battery charging compartment contacts (96) for electrically contacting at least two battery contacts (22) of the rechargeable battery (18),
wherein further in particular
the at least two battery charging compartment contacts (96) are each connected in an electrically conductive manner via an electrical connecting line to one of the two third charging connector contacts (82) of the third charging connector (80),
and/or
b) the charging cradle (62) has a charging connector cover (98) for the first charging connector (26), and **in that** the charging connector cover (98) at least partially, in particularly entirely, covers the first charging connector (26) in a charging position of the hand-held cleaning appliance for hard surfaces (12) in which the hand-held cleaning appliance for hard surfaces (12) engages in the housing receiver (64) with its housing underside (30) and the second charging connector (34) is mechanically and electrically in operative connection with the second plug device (68).

## Revendications

1. Appareil manuel de nettoyage de surfaces dures (12) comprenant un dispositif d'aspiration, une buse d'aspiration (16) coopérant avec le dispositif d'aspiration, une batterie rechargeable (18) destinée à alimenter le dispositif d'aspiration en énergie électrique et un première prise de charge (26) raccordée à la batterie rechargeable (18) pour le raccordement à un dispositif de charge (100), **caractérisé par** une deuxième prise de charge (34) raccordée à la batterie rechargeable (18) pour le raccordement à un dispositif de charge (100).

2. Appareil manuel de nettoyage de surfaces dures selon la revendication 1, **caractérisé par** un logement (14) pourvu d'une face inférieure de logement (30), laquelle définit une surface de pose (32) permettant à l'appareil manuel de nettoyage de surfaces dures (12) de tenir debout, et comprenant au moins une face de logement (28) s'étendant transversalement à la face inférieure de logement (30), dans lequel
a) la première prise de charge (26) est agencée ou formée dans ladite au moins une face de logement (28) et/ou
b) la deuxième prise de charge (34) est agencée ou formée dans la face inférieure de logement (30).

3. Appareil manuel de nettoyage de surfaces dures selon l'une quelconque des revendications précédentes, **caractérisé en ce que** la première prise de charge (26) est réalisée sous la forme d'un premier connecteur femelle de prise de charge (40) pourvu d'au moins deux premiers contacts de prise de charge (24) électro-conducteurs et isolés l'un de l'autre et/ou **en ce que** la deuxième prise de charge (34) est réalisée sous la forme d'un deuxième connecteur femelle de prise de charge (40) pourvu d'au moins deux deuxièmes contacts de prise de charge (36) électro-conducteurs et isolés l'un de l'autre.

4. Appareil manuel de nettoyage de surfaces dures selon la revendication 3, **caractérisé**
a) **en ce que** les premiers contacts de prise de charge (24) sont agencés ou formés de manière à faire saillie parallèlement ou sensiblement parallèlement à la surface de pose (32)
et/ou
b) **en ce que** les premiers et/ou deuxièmes contacts de prise de charge (24 ; 36) ne font pas saillie de la face inférieure de logement (30) et/ou de la face de logement (28).

5. Appareil manuel de nettoyage de surfaces dures selon l'une quelconque des revendications précédentes, **caractérisé en ce que** la première prise de charge (26) et la deuxième prise de charge (34) sont montées électriquement en parallèle.

6. Appareil manuel de nettoyage de surfaces dures selon l'une quelconque des revendications précédentes, **caractérisé par** un compartiment à batterie (20) pour la batterie rechargeable (18).

7. Appareil manuel de nettoyage de surfaces dures selon la revendication 6, **caractérisé**
a) **par** un couvercle de compartiment à batterie pour la fermeture du compartiment à batterie (20)
et/ou
b) en ce qu'au moins deux contacts électro-conducteurs de compartiment à batterie pour la mise en contact électrique avec au moins deux contacts de batterie (22) de la batterie rechargeable (18) sont agencés ou formés dans le compartiment à batterie (20) et en ce que lesdits au moins deux contacts de compartiment à batterie sont raccordés chacun de manière électro-conductrice, par l'intermédiaire d'une ligne de raccordement électrique, à l'un des deux premiers contacts de prise de charge (24) de la première prise de charge et à l'un des deux deuxièmes contacts de prise de charge (36) de la deuxième prise de charge (34) .

8. Appareil manuel de nettoyage de surfaces dures selon l'une quelconque des revendications précédentes, **caractérisé en ce que** la première prise de charge (26) et la deuxième prise de charge (34) présentent une forme différente l'une de l'autre.

9. Système de nettoyage de surfaces dures (10) comportant un appareil manuel de nettoyage de surfaces dures (12) selon l'une quelconque des revendications précédentes et un dispositif de charge (100) prenant la forme d'au moins un appareil de charge de batterie (50), lequel présente un dispositif de raccordement au réseau (52) pour le raccordement à un réseau électrique et un dispositif à prise de charge (56), lequel est conçu pour le raccordement mécanique et électrique à la première et/ou à la deuxième prise de charge (26 ; 34).

10. Système de nettoyage de surfaces dures selon la revendication 9, **caractérisé**
a) **en ce que** le dispositif à prise de charge (56) comporte un câble de connexion (48) pourvu d'un premier dispositif à connecteur (46) et en ce que le premier dispositif à connecteur (46) est conçu pour le raccordement mécanique et électrique à la première ou à la deuxième prise de charge (26 ; 34)
et/ou
b) **en ce que** l'appareil de charge de batterie (50) comporte une alimentation à découpage ou est réalisé sous la forme d'une alimentation à découpage,
dans lequel en particulier
l'alimentation à découpage est réalisée sous la forme d'une alimentation à découpage à fiche (60) pour le raccordement au réseau électrique.

11. Système de nettoyage de surfaces dures selon la revendication 9 ou 10, **caractérisé en ce que** le dispositif à prise de charge (56) comporte une coque de charge (62) pourvue d'un logement de corps (64) destiné à loger au moins en partie l'appareil manuel de nettoyage de surfaces dures (12) en position verticale.

12. Système de nettoyage de surfaces dures selon la revendication 11, **caractérisé**
a) **en ce que** la coque de charge (62) comprend un deuxième dispositif à fiche (68) et en ce que le deuxième dispositif à fiche (68) est formé de manière à correspondre à la deuxième prise de charge (34), dans lequel en particulier
le logement de corps (64) présente une surface de pose (66) pour la face inférieure de corps (30) et en ce que le deuxième dispositif à fiche (68) est agencé ou formé de manière à faire saillie de la surface de pose (66)
et/ou
b) **en ce que** la coque de charge (62) comprend une troisième prise de charge (80), laquelle est raccordée de manière électro-conductrice au deuxième dispositif à fiche (68),
dans lequel en particulier
b1) la troisième prise de charge (80) et la première prise de charge (26) sont identiques ou sensiblement identiques
et/ou
b2) la troisième prise de charge (80) est formée de manière à correspondre au premier dispositif à fiche (46).

13. Système de nettoyage de surfaces dures selon la revendication 11 ou 12, **caractérisé en ce que** la coque de charge (62) présente une face inférieure de coque de charge (74), laquelle définit une surface de pose de coque de charge (76) orientée dans la direction opposée au logement de corps (64),
dans lequel en particulier
a) la face inférieure de coque de charge présente au moins un évidement (78) et la troisième prise de charge (80) est agencée ou formée dans ledit au moins un évidement (78)
et/ou
b) la troisième prise de charge (80) comprend deux troisièmes contacts de prise de charge (82), qui sont agencés ou formés de manière à faire saillie parallèlement ou sensiblement parallèlement à la surface de pose de coque de charge (76).

14. Système de nettoyage de surfaces dures selon l'une quelconque des revendications 11 à 13, **caractérisé en ce que** la coque de charge (62) présente au moins un évidement de câble de raccordement (84), à travers lequel un câble de raccordement (48) est guidé,
dans lequel en particulier
la coque de charge (62) présente une paroi latérale de coque de charge (86) et **en ce que** l'évidement de câble de raccordement (84) est ménagé ou formé dans la paroi latérale de coque de charge (86), en particulier dans la zone de transition vers la face inférieure de coque de charge (74).

15. Système de nettoyage de surfaces dures selon l'une quelconque des revendications 11 à 14, **caractérisé**
a) **en ce que** la coque de charge (62) comprend un compartiment de charge de batterie (90) pour une batterie rechargeable (18) de l'appareil manuel de nettoyage de surfaces dures (12),
dans lequel en particulier
a1) la coque de charge (62) comprend un couvercle de compartiment de charge de batterie (92) destiné à fermer le compartiment de charge de batterie (90) et/ou
a2) au moins deux contacts électro-conducteurs de compartiment de charge de batterie (96) destinés à la mise en contact électrique avec au moins deux contacts de batterie (22) de la batterie rechargeable (18) sont agencés ou formés dans le compartiment de charge de batterie (90),
dans lequel plus particulièrement
lesdits au moins deux contacts de compartiment de charge de batterie (96) sont raccordés de manière électro-conductrice à l'un des deux troisièmes contacts de prise de charge (82) de la troisième prise de charge (80) respectivement par l'intermédiaire d'une ligne de raccordement électrique,
et/ou
b) **en ce que** la coque de charge (62) présente un cache de prise de charge (98) pour la première prise de charge (26) et en ce que le cache de prise de charge (98) recouvre au moins en partie, en particulier intégralement la première prise de charge (26) dans une position de charge de l'appareil manuel de nettoyage de surfaces dures (12), dans laquelle l'appareil manuel de nettoyage de surfaces dures (12) s'insère par sa face inférieure de logement (30) dans le logement de corps (64) et la deuxième prise de charge (34) est en liaison fonctionnelle mécanique et électrique avec le deuxième dispositif à fiche (68).
